# EUROPÄISCHE PATENTANMELDUNG

(11) **EP 1 283 014 A1**
(43) Veröffentlichungstag der Anmeldung: **12.02.2003**
(21) Anmeldenummer: 02017027.0
(22) Anmeldetag: 29.07.2002
(51) Int. Cl.: A23K 3/00, A23K 1/16, A23K 1/18

(54) **Konservierte Futtermittel und Verfahren zu ihrer Herstellung**

(30) Priorität: 09.08.2001 DE 10139162
(71) Anmelder: Nutrinova Nutrition Specialties & Food Ingredients GmbH, 65929 Frankfurt am Main (DE)
(72) Erfinder: Von Rymon Lipinski, Gert-Wolfhard, Prof., 65824 Schwalbach (DE); Haber, Bernd, Dr., 55126 Mainz (DE); Jager, Martin, Dr., 67294 Gauersheim (DE)
(74) Vertreter: Schweitzer, Klaus, Dr.

(57) **Zusammenfassung**

Die Erfindung betrifft Futtermittel, welche Lauroylaminosäurealkylester (LASE) 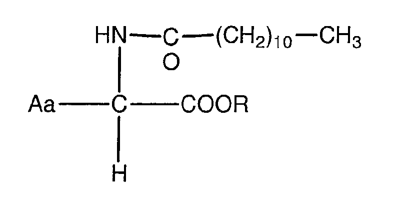 mit
R= unverzweigtes oder verzweigtes C₁-C₄-alkyl und
Aa= Aminosäurerest,
enthalten. Diese Futtermittel werden in der Nutztieraufzucht eingesetzt.

## Beschreibung

Die Erfindung betrifft konservierte Futtermittel, die eine Übertragung von Mikroorganismen auf Tiere verhindern oder das Risiko einer solchen Übertragung deutlich vermindern.

Futtermittel verschiedener Art ermöglichen das Wachstum verschiedener Mikroorganismen. Von diesen haben Hefe und Schimmelpilze in erster Linie Bedeutung als Quellen für Verderb und die Bildung von Mycotoxinen. Sie können darüber hinaus auch die Verdauung der Tiere beeinträchtigen und damit die Futterverwertung verschlechtern. Konservierungsstoffe wie Sorbinsäure, Propionsäure und Ameisensäure unterdrücken die Entwicklung unerwünschter Hefe und Schimmelpilze in Futtermitteln und erlauben damit, nachteilige Wirkungen dieser Mikroorganismengruppen zu vermeiden. Sie wirken allerdings nur in begrenztem Maße gegen Bakterien.

In Futtermitteln mit höherem Wassergehalt können sich Bakterien aber durchaus vermehren, und in Lebensmitteln mit geringerem Wassergehalt können einige Bakterien überleben. Gelangen solche Bakterien in den Tierkörper, besteht die Möglichkeit, dass sie sich dort vermehren und entweder zu Krankheiten des Tieres führen oder sogar auf das aus den Tieren gewonnene Fleisch und daraus hergestellte Fleischerzeugnisse übergehen.

Industrielle Herstellung der Futtermittel, längere Transportwege und längere Aufbewahrungszeiten in den Tiermastbetrieben haben dazu geführt, dass sich die Möglichkeiten für das Wachsen von Mikroorganismen in Futtermitteln deutlich verbessert haben. Damit haben sich Futtermittel zunehmend zu einer Kontaminationsquelle für die Tiere und die daraus hergestellten Erzeugnisse entwickelt.

Der Schutz vor bakteriellem Verderb mit Hilfe konservierend wirkender Stoffe ist bisher selbst bei Lebensmitteln nicht befriedigend möglich. Dabei bestehen bei der Konservierung von Lebensmitteln eigentlich günstigere Ausgangsbedingungen als bei Futtermitteln. Es ist bei der Lebensmittelherstellung leichter möglich, Kontaminationen von Rohstoffen und Zwischenprodukten zu vermeiden, da bei Gewinnung und Lagerung leichter hygienische Rahmenbedingungen eingehalten werden können und damit von vornherein bereits oft eine weitaus niedrigere Keimbelastung vorliegt. Sofern sich mit den zugelassenen Konservierungsstoffen kein befriedigender Schutz erreichen lässt, können die in der Regel aufwendigeren und teureren physikalischen Verfahren der Haltbarmachung wie Sterilisieren bei Dosenkonserven, Pasteurisieren bei Produkten begrenzter Lagerdauer oder Tiefgefrieren zum Einsatz kommen.

Anders steht es bei Futtermitteln, die schon auf der Stufe der Rohstoffe und unter vielen Bedingungen, die bei der Herstellung üblich sind, mit erheblichen Mengen an Mikroorganismen kontaminiert werden und aus den genannten Gründen das Wachsen von Mikroorganismen begünstigen können.

Die Möglichkeiten der Kontamination verstärken sich noch unter den Bedingungen der Zubereitung, die in der Praxis oft im Stall oder in der Nähe des Stalls, also einer Umgebung mit hohem Kontaminationsrisiko erfolgt. Das gilt gerade auch für Futtermittel mit höherem Wassergehalt, die oft erst kurz vor der Verfütterung zubereitet werden. In Substraten, die das Wachsen von Verderbserregern begünstigen, erfolgt der Verderb um so schneller, je höher die Keimzahl liegt.

Bei den im Stall oft herrschenden höheren Temperaturen finden viele Mikroorganismen grundsätzlich gute Vermehrungsmöglichkeiten. Wenn eine hohe Anfangskontamination vorliegt, kann diese schon bei begrenztem Stehen zu Keimzahlen anwachsen, die sich als offensichtlicher Verderb zu erkennen geben. Damit bestehen in der Konservierung von Futtermitteln weitaus ungünstigere Ausgangsbedingungen als bei Lebensmitteln. Dem wird bei der Zulassung der verfügbaren Konservierungsstoffe für Futtermittel, die allerdings vorzugsweise gegen Schimmelpilze und Hefen und weitaus weniger gut gegen Bakterien wirken, dadurch Rechnung getragen, dass sie ohne mengenmäßige Beschränkung verwendet werden dürfen, währen die gleichen Stoffe bei Lebensmitteln zum Teil nur mit 1 g/kg und selten mit mehr als 2 g/kg zugelassen sind.

Offensichtlicher bakterieller Verderb von Futtermitteln kann nicht nur nachteilige Effekte auf die Tiere haben, sondern sogar zur Kontamination von Schlachtfleisch mit bedenklichen Mengen an Keimen führen kann. Das gilt gerade auch für Enterobakterien, die bei höheren Temperaturen zum Teil sehr kurze Generationszeiten haben. Schon bei Standzeiten zwischen Zubereitung und Verfütterung von Futter mit hohem Wassergehalt kann unter Umständen eine deutliche Vermehrung solcher Bakterien eintreten. Besonders groß ist das Risiko aber, wenn Reste an Flüssigfutter in den Trögen verbleiben und von den Tieren später noch aufgenommen werden.

Eine Reihe der Bakterien, die aus Futtermitteln auf Tiere übergehen können, sind auch für den Menschen pathogen. Dazu gehören besonders Salmonellen, Listeria monocytogenes und bestimmte Stämme von Escherichia coli, die bei Infektionen alle zu erheblichen Krankheitserscheinungen und nicht selten sogar zum Tode führen. Insbesondere humanpathogene Salmonellen und E. coli sind in Futtermitteln immer wieder anzutreffen.

Von diesen ist der Stamm E. coli O157:H7 besonders problematisch. Er ist erst in den letzten Jahren ins Blickfeld getreten, findet heute aber höchste Aufmerksamkeit, weil er auf Grund seiner Eigenschaften, die sich von gängigen E. coli-Stämmen sehr deutlich unterscheiden, besonders problematisch ist. Er wird in der letzten Zeit recht häufig im Kot von Wiederkäuern gefunden, ist gegenüber Umwelteinflüssen sehr resistent und deshalb besonders schwierig zu kontrollieren und mit den gängigen Verfahren der Lebensmittelkonservierung auch weitaus schwieriger auszuschalten als andere E. coli-Stämme und darüber hinaus extrem infektiös. Bei empfindlichen Personen soll bereits eine einmalige Aufnahme von 100 Zellen, nach einer anderen sogar von 10 - 100 Zellen zu Erkrankungen führen (J. Krämer: Lebensmittel-Mikrobiologie, Stuttgart 1997, S. 50- 51 und R. Steinmüller, Ernährungs-Umschau 47 (10), B 37 - B 40 (2000)). Die Erkrankungen sind oft von Durchfällen begleitet, können aber bei 10 - 20 % der Erkrankten ein der Ruhr ähnliches Bild mit blutigem Stuhl annehmen und bei 5 - 10 % dieser schwer Erkrankten zu akutem Nierenversagen führen, das bei 10 % der Betroffen sogar zum Tode führt.

Zur Vermeidung von Kontaminationen wird vorgeschlagen, die Hygiene insbesondere beim Schlachten zu verbessern und Fäkalkontaminationen zu vermeiden (J. Krämer, a. a. O.), da eine Sanierung der Tierbestände nicht möglich sei.

Der Schutz von Futtermittel vor Bakterien, auch solchen, die durch Kontamination im Stall auf sie gelangen, ist also ein Problem von großer praktischer Bedeutung, das aber bisher nicht zuverlässig gelöst ist. Es besteht also das Bedürfnis, einerseits die Kontamination von Futtermitteln mit Bakterien, insbesondere humanpathogenen Bakterien und andererseits die Futtermittel als Quelle für die Kontamination von Tieren und tierischen Lebensmitteln mit derartigen Bakterien soweit wie möglich auszuschalten.

Es besteht also nach wie vor die Aufgabe, eine einfache Möglichkeit zu finden, Futtermittel vor unerwünschten, insbesondere humanpathogenen Bakterien zu schützen und die mögliche Übertragung dieser Bakterien auf Tiere auszuschließen, ohne dass ein Risiko der Resistenzbildung entsteht oder der Nährwert der Futtermittel beeinträchtigt wird.

Konservierungsstoffe für bakteriell anfällige Futtermittel sollten eine schnelle und ausgeprägte Wirkung gegen Bakterien zeigen, und das unter den Bedingungen der Gewinnung und Zubereitung von Futtermitteln, weil diese für die Vermehrung der Bakterien in der Regel sehr günstig sind. Auf Grund ihrer vorzugsweise gegen Schimmelpilze und Hefen gerichteten Wirkung entsprechen die gängigen, in der Konservierung von Lebensmitteln und Futtermitteln verwendeten Konservierungsstoffe wie Sorbinsäure, Propionsäure und Ameisensäure diesem Anforderungsprofil nur teilweise. Bakterien lassen sich mit ihnen zwar abtöten, aber nur unter Bedingungen, die das Futtermittel für Tiere nicht mehr verträglich machen. Soweit Antibiotika in Futtermitteln allgemein und nicht nur zu therapeutischen Zwecken eingesetzt werden, besteht das Risiko der Ausbildung von Resistenzen, die sich auch auf Stoffe erstrecken können, die zu therapeutischen Zwecken bei Tier und Mensch eingesetzt werden. Aus diesem Grund kann die Verwendung von Antibiotika in Futtermitteln nicht als geeignete Problemlösung angesehen werden.

Antibakteriell wirkende Stoffe, die in Lebensmitteln, Kosmetika oder technischen Anwendungen üblich sind, kommen für die Verwendung in Futtermitteln nicht ohne weiteres in Frage. Schwefelige Säure und Natriumnitrit lassen sich schon aus toxikologischen Gründen nicht allgemein in Futtermitteln einsetzen. Die in Lebensmitteln begrenzt eingesetzten Stoffe Lysozym und Nisin zeichnen sich durch ein nur begrenztes Wirkungsspektrum aus, und können darüber hinaus durch Enzyme der Futtermittel oder in ihnen enthaltener Mikroorganismen abgebaut werden. Konservierungsstoffe für Kosmetika oder technische Anwendungen sind in der Regel nicht hinreichend verträglich für Tiere, dass sie auf breiter Basis in Futtermitteln zum Einsatz kommen können.

Die weiteren Verfahren zur Haltbarmachung, die bei Lebensmitteln angewendet werden können, wie beispielsweise Pasteurisation, Sterilisation, Kühlen oder Gefrieren, sind bei Futtermitteln in vielen Fällen aus Kostengründen nicht anwendbar. Dazu kommt, dass bei ihnen nachträgliche Kontaminationen nicht kontrolliert werden können, die aufgrund der hygienischen Verhältnisse bei der Tierfütterung in der Regel nicht ausgeschlossen werden können.

In der letzten Zeit wurden Lauroylaminosäurealkylester (LASE), insbesondere Lauroylargininethylester (LAE) als Konservierungsstoff für Lebensmittel vorgeschlagen (z. B. EP-A 0 749 960, US-A 5,780,658). Diese Stoffe zeichnen sich durch gute antibakterielle Wirkung, beispielsweise gegen E. coli ATCC-# 9027, Staphylococcus aureus ATCC-# 8739 sowie gegen Hefen und Pilze aus. Im Organismus werden sie schnell und vollständig zu Laurinsäure und den entsprechenden Aminosäuren und Alkoholen abgebaut, im Falle von LAE zu Laurinsäure, Arginin und Ethanol, und unter Energiegewinn verstoffwechselt. Futtermittel mit einem Gehalt an LASE, insbesondere LAE sowie eine Wirkung insbesondere gegen humanpathogene Mikroorganismen sind noch nicht bekannt.

Es besteht nach wie vor die Aufgabe, eine einfache Möglichkeit zu finden, Futtermittel vor unerwünschten Bakterien zu schützen und die mögliche Übertragung auf Tiere auszuschließen, ohne dass ein Risiko der Resistenzbildung besteht und der Nährwert der Futtermittel beeinträchtigt wird.

Überraschenderweise wurde nun gefunden, dass sich LASE, 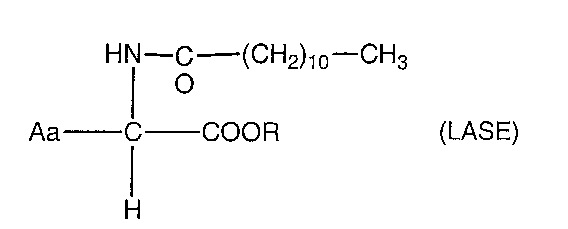 mit
- R=: unverzweigtes oder verzweigtes C₁-C₄-alkyl und
- Aa=: Aminosäurerest, insbesondere Aminosärerest einer basisch reagierenden Aminosäure, besonders bevorzugt ein Arginin-, Histidi-, Lysin- oder Ornithinrest;
insbesondere Lauroylargininethylester (LAE) 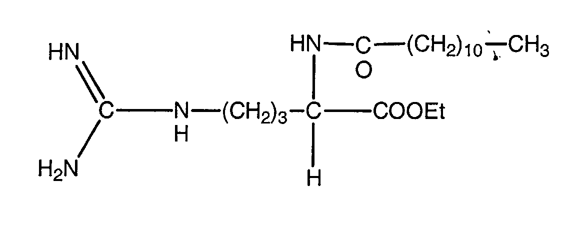 gerade auch durch gute Wirkung gegen pathogene Bakterien auszeichnen. Solche pathogenen Bakterien sind in Lebensmitteln eine potentielle Gefahr mit hohem Gesundheitsrisiko, weitaus schwieriger noch sind sie aber in Futtermitteln zu kontrollieren. Die Wirkung der LASE wird überraschenderweise bereits bei sehr niedrigen Konzentrationen erreicht, die allenfalls auf der Höhe der sonst eingesetzten Konservierungsstoffe, eher aber darunter liegen. Schon innerhalb kurzer Zeit führt die Zugabe von LASE zu einer deutlichen Verminderung der Bakterienzahlen, insbesondere der humanpathogenen Bakterien, darunter auch dem als besonders resistent bekannten Stamm E. coli O157:H7. Das Auftreten von Resistenzen gegen LASE ist nicht bekannt. Damit und durch den Abbau dieser Verbindungen im Körper ist der Zusatz von LASE ein besonders interessanter, wirtschaftlicher und unbedenklicher Weg, das Vorkommen pathogener Bakterien in Futtermitteln zu unterdrücken und dadurch die Übertragung auf Schlachttierkörper zu minimieren.

Als Bestandteile von LASE kommen grundsätzlich alle basischen und neutralen Aminosäuren in Frage, also Aminosäuren, die lediglich eine Carboxylgruppe im Molekül enthalten, vorzugsweise aber basisch reagierende Aminosäuren wie Histidin, Lysin und Ornithin und ganz besonders bevorzugt Arginin.

Die Alkyreste sind prinzipiell in weiten Grenzen frei wählbar, sind aber vorzugsweise lineare oder verzweigte C₁-C₄-Reste. Ganz besonders bevorzugt ist, auch wegen seiner im Vergleich zu den anderen Resten günstigeren physiologischen Eigenschaften, der Ethylester.

Daraus ergibt sich als die bevorzugte Verbindung für die erfindungsgemäßen Futtermittel der Lauroylargininethylester (LAE).

Die Herstellung von LASE erfolgt in bekannter Weise beispielsweise durch Umsetzung von Aminosäurealkylestern mit Fettsäurechloriden (EP-A 0 749 960) oder von Aminosäuren mit Fettsäurechloriden und anschließender Veresterung (GB-A 1352420).

Erfindungsgemäß wird unter Futtermitteln Allein- und Mischfuttermittel für Nutztiere einschließlich Geflügel und Fische sowie Heimtierfutter
- in stückiger Form
- pulverisiert oder fein zerkleinert
- granuliert
- pelletiert
sowie Grundstoffe und Vormischungen dafür verstanden. Weiterhin eingeschlossen sind Grundstoffe und Vormischungen für die Herstellung pastöser und flüssiger Zubereitungen, insbesondere für Milchaustauscher sowie Starter- und Aufzuchtfutter.

LASE kann bei festen Produkten als solches eingemischt werden aber auch als Lösung. Für die Herstellung von Lösungen von LASE bieten sich in erster Linie 1,2-Propandiol, Glycerin und flüssige Polyethylenglykole als Lösemittel an, in denen LASE sehr gut löslich ist. Ebenso eignen sich hierfür andere Polyole wie z.B. Butandiol, Diethylenglycol und C₁-C₃-Alkohole. Neben den reinen Lösemitteln sind auch deren Mischungen sowie Mischungen mit Wasser einsetzbar, wobei die begrenzte Wasserlöslichkeit des LASE in der Praxis den Wassergehalt auf Werte unter 50 Gew.-% limitiert. Der Gehalt an LASE in der Lösung beträgt zweckmäßigerweise 10 bis 30 Gew.-%, bevorzugt 10 bis 20 Gew.-% (bezogen auf die Lösung).

Der Zusatz von LASE ist bei allen Futtermitteln möglich, die mechanisch bearbeitet werden können oder deren Oberfläche mit einer Lösung besprüht werden kann. Der Zusatz kann bei Einzelfuttermitteln wie bei zusammengesetzten Futtermitteln erfolgen. Die Einarbeitung kann dabei direkt erfolgen. Als Alternative besteht die Möglichkeit, LASE einzelnen Komponenten oder Vormischungen zuzusetzen und über diese gleichmäßig in das zur Verfügung bestimmte Futtermittel einzuarbeiten. Bei flüssigen Futtermitteln oder Futtermitteln mit höherem Wassergehalt, die weichere oder pastöse Konsistenz haben, lässt sich LASE ebenfalls problemlos in Form der Lösung z.B. in Propandiol einarbeiten.

Das LASE wird in den Futtermitteln zweckmäßigerweise in minimalen Konzentrationen von 0.02 g, vorzugsweise 0.05 g, insbesondere 0.08g bis maximal 5g, vorzugsweise 2 g, insbesondere 1.8 g je kg Futtermittel eingesetzt. Werden die LASE Vormischungen oder einzelnen Bestandteilen zugesetzt und mit diesen in das fertige Futtermittel eingearbeitet, werden die Dosierungen so gewählt, dass sich für das fertige Futtermittel diese Konzentrationen ergeben.

Die für die Haltbarmachung von Futtermitteln ausreichenden, relativ geringen Dosierungen beeinträchtigen die Akzeptanz des Futters durch die Tiere nicht.

Damit stellt diese Erfindung einen ganz wesentlichen Fortschritt in der Vermeidung der Übertragung von Infektionen vom Tier auf den Menschen dar.

Die Erfindung wird durch die folgenden Beispiele näher erläutert. In diesen Beispielen wird teilentzuckertes Molkepulver eingesetzt, ein Bestandteil vieler Futtermittel, das auf den für das Wachsen vieler Bakterien günstigen pH-Bereich von 6,1 - 6,2 eingestellt wurde. Das Molkepulver wurde mit einer wässrigen Pufferlösung angeteigt, so dass zusammen mit der Keimsuspension in physiologischer Kochsalzlösung ein Verhältnis von Molkepulver zu Wasser von ca. 2 : 1 resultierte. Den Proben wurde LAE in Konzentrationen von 200, 400 und 800 mg/kg zugegeben, während eine Kontrollprobe ohne Zusatz blieb. In den resultierenden Pasten wurde unmittelbar nach der Herstellung, nach 24 h und nach 48 h Lagerung bei Raumtemperatur die Keimzahl in üblicher Weise bestimmt.

### Beispiel 1

### Wirkung gegen Escherichia coli 0157:H7(ca. 6 x 10⁵/g)

Eine in der beschriebenen Weise hergestellte Paste aus Molkenpulver wurde mit ca. 6 x 10⁵/g E. coli O157:H7 EDL 933 beimpft. In der Kontrollprobe ohne LAE war nach 24 h die Keimzahl geringfügig abgesunken, während bei allen LAE-Konzentrationen ein konzentrationsabhängig deutlicher Rückgang feststellbar war, der sich bei längerer Lagerung noch fortsetzte. Bei 800 mg/kg LAE-Zusatz lag die Keimzahl nach 48 h bei weniger als 10 % des Zusatzwertes.

### Beispiel 2

### Wirkung gegen Escherichia coli 0157:H7(ca. 3 x 10³/g)

Eine in der beschriebenen Weise hergestellte Paste aus Molkenpulver wurde mit ca. 3 x 10³/g E. coli O157:H7 EDL 933 beimpft. In der Kontrollprobe ohne LAE war nach 24 h die Keimzahl erkennbar abgesunken, aber bei allen LAE-Konzentrationen ein konzentrationsabhängig weitaus deutlicherer Rückgang feststellbar, der sich bei längerer Lagerung noch fortsetzte. Bei 800 mg/kg LAE-Zusatz lag die Keimzahl nach 48 h bei weniger als 10 % des Zusatzwertes.

### Beispiel 3

### Wirkung gegen Listeria monocytogenes (ca. 5 x 10⁵/g)

Eine in der beschriebenen Weise hergestellte Paste aus Molkenpulver wurde mit ca. 5 x 10⁵/g L. monocytogenes ATCC 13311 beimpft. In der Kontrollprobe ohne LAE war nach 24 h die Keimzahl geringfügig abgesunken, während bei allen LAE-Konzentrationen ein konzentrationsabhängig deutlicherer Rückgang feststellbar war, der sich bei längerer Lagerung noch fortsetzte. Bei 800 mg/kg LAE-Zusatz lag die Keimzahl nach 48 h bei ca. 15 % des Zusatzwertes.

### Beispiel 4

### Wirkung gegen Listeria monocytogenes (ca. 2 x 10³/g)

Eine in der beschriebenen Weise hergestellte Paste aus Molkenpulver wurde mit ca. 2 x 10³/g L. monocytogenes ATCC 13311 beimpft. In der Kontrollprobe ohne LAE war nach 24 h die Keimzahl geringfügig abgesunken, während bei allen LAE-Konzentrationen ein konzentrationsabhängig deutlicherer Rückgang feststellbar war, der sich bei längerer Lagerung noch fortsetzte. Bei 800 mg/kg LAE-Zusatz lag die Keimzahl nach 48 h bei weniger als 20 % des Zusatzwertes.

### Beispiel 5

### Wirkung gegen Salmonella typhimurium (ca. 3 x 10⁴/g)

Eine in der beschriebenen Weise hergestellte Paste aus Molkenpulver wurde mit ca. 3 x 10⁴/g S. typhimurium NCTC 10527 beimpft. In der Kontrollprobe ohne LAE war nach 24 h die Keimzahl erkennbar abgesunken, aber bei allen LAE-Konzentrationen ein konzentrationsabhängig noch weitaus deutlicherer Rückgang feststellbar, der sich bei längerer Lagerung noch fortsetzte. Bei 800 mg/kg LAE-Zusatz waren die Testkeime nach 48 h nicht mehr nachweisbar.

## Patentansprüche

1. Futtermittel, **gekennzeichnet durch** einen Gehalt an Lauroylaminosäurealkylester (LASE) 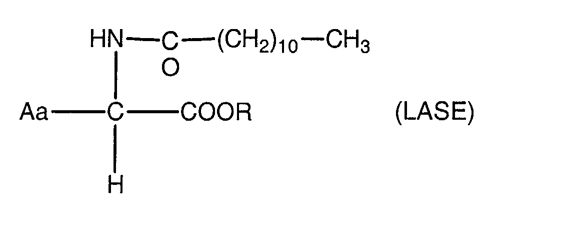 mit
R= unverzweigtes oder verzweigtes C₁-C₄-alkyl und
Aa= Aminosäurerest.

2. Futtermittel nach Anspruch 1, **dadurch gekennzeichnet, dass** der Lauroylaminosäurealkylester Lauroylargininethylester (LAE) 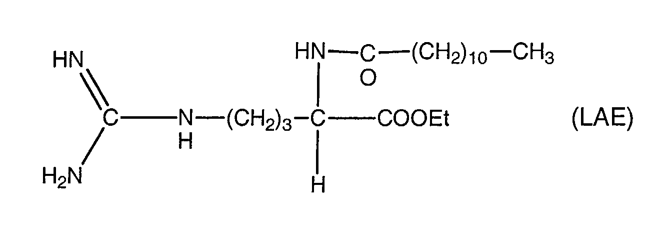 ist.

3. Futtermittel gemäß Anspruch 1 oder 2, **dadurch gekennzeichnet, dass** der Gehalt an LASE 0,02 bis 5 g je Kilogramm Futtermittel beträgt.

4. Futtermittel gemäß einem der Ansprüche 1 bis 3, **dadurch gekennzeichnet, dass** festes LASE eingearbeitet wird.

5. Futtermittel gemäß einem der Ansprüche 1 bis 4, **dadurch gekennzeichnet, dass** LASE in gelöster Form ein- oder aufgebracht wird.

6. Futtermittel gemäß einem der Ansprüche 1 bis 5, **dadurch gekennzeichnet, dass** es eine Lösung von LASE enthält.

7. Futtermittel gemäß Anspruch 6, **dadurch gekennzeichnet, dass** 1,2-Propandiol, Glycerin, flüssige Polyethylenglycole oder deren Mischungen oder Mischungen dieser Stoffe mit Wasser als Lösemittel verwendet werden.

8. Futtermittel gemäß Anspruch 6 oder 7, **dadurch gekennzeichnet, dass** der LASE-Gehalt der Lösung 10 bis 30 Gew.-% beträgt.

9. Verwendung von LASE zur Herstellung von Futtermitteln für die Nutztieraufzucht.

10. Verwendung nach Anspruch 9, **dadurch gekennzeichnet, dass** die Nutztiere Rinder, Schafe, Schweine, Geflügel oder Fische sind.
